# EUROPÄISCHE PATENTSCHRIFT

(11) **EP 1 646 519 B1**
(45) Veröffentlichungstag und Bekanntmachung des Hinweises auf die Patenterteilung: **19.08.2009**
(21) Anmeldenummer: 04739907.6
(22) Anmeldetag: 15.06.2004
(51) Int. Cl.: B60H 1/00

(54) **EINBAUANORDNUNG FÜR EINE KLIMAANLAGE MIT HEIZEINRICHTUNG**
ASSEMBLY ARRAY FOR AN AIR CONDITIONER WITH A HEATING DEVICE
SYSTEME D'ENCASTREMENT DESTINE A UNE CLIMATISATION DE VEHICULE

(30) Priorität: 09.07.2003 DE 10331123; 13.02.2004 DE 102004007511
(43) Veröffentlichungstag der Anmeldung: 19.04.2006
(73) Patentinhaber: Behr GmbH & Co. KG, 70469 Stuttgart (DE)
(72) Erfinder: BOUCHALAT, Karim-Mathieu, 70188 Stuttgart (DE); DIGELE, Jörg, 71691 Freiberg (DE); SCHWEIZER, Gebhard, 71229 Leonberg (DE); SCHENKEWITZ, Werner, 70195 Suttgart (DE)
(74) Vertreter: Mantel, Berthold Friedrich
(86) Internationale Anmeldenummer: PCT/EP2004/006437
(87) Internationale Veröffentlichungsnummer: WO 2005/005183

(56) Entgegenhaltungen:
- EP-A- 0 578 582
- US-A1- 2002 000 313

## Beschreibung

Die Erfindung betrifft eine Einbauanordnung für eine Klimaanlage mit Heizeinrichtung, insbesondere für den Einsatz in Kraftfahrzeugen.

Vorrichtungen zum kühlen von Luft, welche in den Fahrgastraum eines Kraftfahrzeuges geleitet wird, sind im Stand der Technik bekannt. Diese Bauformen weisen jedoch den Nachteil auf, dass zusätzlicher Bauraum geschaffen werden muss, um beispielsweise eine zusätzliche Heizung in der Vorrichtung zu integrieren. Ferner wird im Stand der Technik Umluft mittels einer zusätzlichen Heizeinrichtung erwärmt, wobei zusätzliche Lüfter notwendig sind, um eine ausreichende Luftzufuhr in den Fahrgastraum zu gewährleisten.

Aus der US 6,581,678 B1 ist eine Einbauanordnung für eine Klimaanlage mit Heizrichtung nach dem Oberbegriff des Anspruchs 1 bekannt.

Es ist Aufgabe der vorliegenden Erfindung, eine Einbauanordnung für eine Klimaanlage mit wenigstens einer Heizeinrichtung, insbesondere für Kraftfahrzeuge, bereitzustellen, welche die im Stand der Technik bekannten Probleme reduziert und kostengünstig herzustellen ist.

Die Aufgabe wird durch den Gegenstand gemäß Anspruch 1 gelöst. Weitere Ausführungsbeispiele sind Gegenstand der Unteransprüche.

Die erfindungsgemäße Einbauanordnung für eine Klimaanlage mit Heizeinrichtung, insbesondere für Kraftfahrzeuge, weist wenigstens ein Gehäuse auf, in welchem Luft in einen wenigstens teilweise vorgegebenen Strömungsweg geführt wird. Hierbei wird der Strömungsweg sowohl durch die Innenseite des Gehäuses als auch durch zusätzliche Elemente und/oder Bauteile gebildet. Innerhalb des Gehäuses ist ferner wenigstens eine Heizeinrichtung und wenigstens eine Stelleinrichtung aufgenommen, wobei die Heizeinrichtung in einem ersten Strömungsweg und die Stelleinrichtung wenigstens teilweise in einem anderen, einem zweiten Strömungsweg angeordnet ist.

Gemäß der vorliegenden Erfindung ist die Stelleinrichtung derart angeordnet, dass sie wenigstens in einer Position, insbesondere einer Schließposition, die weitgehend vollständige Durchströmung der Heizeinrichtung durch die Luft bewirkt.

Bevorzugt wird unter einer Stelleinrichtung eine Vorrichtung oder ein Bauteil verstanden, die wenigstens um eine Achse drehbeweglich gelagert ist und in dem Strömungsweg so angeordnet ist, dass der Strömungsweg in seinem Strömungsquerschnitt durch die Stelleinrichtung beeinflusst wird.

Bevorzugt ist die Stelleinrichtung wenigstens in einer Stellung in Kontakt mit einem Abschnitt der Heizeinrichtung. So ist die Stelleinrichtung bei einer bevorzugten Ausführungsform beispielsweise eine drehbewegliche Klappe, deren Drehpunkt um die halbe Klappenbreite von der Außenkontur der Heizeinrichtung versetzt angeordnet ist, und weiche in der Schließposition sowohl die Außenkontur der Heizeinrichtung als auch die Innenkontur des zweiten Strömungsweges wenigstens teilweise berührt.

Vorzugsweise weist die Einbauanordnung für eine Klimaanlage mit Heizeinrichtung wenigstens einen Einlass, insbesondere eine Einlassöffnung, und wenigstens einen Auslass, insbesondere eine Auslassöffnung für die Luft auf. Gemäß eines weiteren besonders bevorzugten Ausführungsbeispiels können insbesondere auch mehrere Einlässe für beispielsweise Außen- bzw. Frischluft und/oder Umluft oder auch mehrere Auslässe für verschiedene Positionen, insbesondere in der Fahrzeugkabine, vorgesehen sein, wie die Frontscheibe, der Fußraum oder dergleichen,

Die Einbauanordnung für eine Klimaanlage mit Heizeinrichtung weist gemäß einer besonders bevorzugten Ausführungsform eine Heizeinrichtung auf, die insbesondere aus einer Gruppe von Heizeinrichtungen ausgewählt wird, welche Wärmetauscher, insbesondere Wärmepumpen, CO₂-Wärmepumpen, Abgaswärme nutzende Heizungen, Brennstoffheizungen, Kondensatoren, Standheizungen, elektrische Heizungen, PTC-Heizungen, Kombinationen hiervon und dergleichen enthält.

Bevorzugt weist die Heizeinrichtung einer erfindungsgemäßen Einbauanordnung wenigstens einen wärmeleitenden Kern auf, dessen Wärmeaustauschflächen durch Bleche, die insbesondere an der Oberfläche des Kerns wärmeleitend angeordnet sind, gebildet wird. Die Wärmeaustauschflächen sind in einem vorgegebenen Winkel zur Hauptausdehnungsrichtung des Kerns, insbesondere dessen Mittelachse, angeordnet. Dieser Winkel liegt gemäß eines besonders bevorzugten Ausführungsbeispiels zwischen 0 Grad und 90 Grad, bevorzugt zwischen 45 Grad und 90 Grad, besonders bevorzugt zwischen 75 Grad und 90 Grad und insbesondere bei etwa 90 Grad.

Bei einer Ausführungsform der Erfindung liegen die geometrischen Mittelpunkte der Wärmetauscherflächen im Wesentlichen auf der Längsmittelachse des wärmeleitenden Kerns und sind in einem vorgegebenen Abstand zueinander angeordnet.

Gemäß einer weiteren bevorzugten Ausführungsform sind die Flächen der Wärmetauscherflächen quadratisch, kreisförmig, elliptisch, polygonförmig, Mischformen hiervon oder dergleichen gestaltet, wobei gemäß einer besonders bevorzugten Ausführungsform im wesentlichen quadratische Flächen verwendet werden.

Bei einer besonders bevorzugten Ausführungsform der vorliegenden Erfindung wird zumindest ein Teilbereich der Oberfläche des wärmeleitenden Kerns von der die Heizeinrichtung durchströmenden Luft umströmt. Hierunter ist auch eine solche Strömung zu verstehen, bei der die Strömung der die Heizeinrichtung durchströmenden Luft den wärmeleitenden Kern der Heizeinrichtung nicht umgibt, sondern sich lediglich entlang eines Teilbereichs der Oberfläche des wärmeleitenden Kerns erstreckt. Besonders bevorzugt ist der Querschnitt des wärmeleitenden Kerns so ausgeführt, dass die entlang eines solchen Teilabschnittes strömende Luft zumindest im Wesentlichen laminar strömt, also keine oder nur wenige Strömungswirbel in der Umgebung des wärmeleitenden Kerns auftreten, welche beispielsweise aufgrund der Geschwindigkeit der Strömung als auch aufgrund der Oberflächenbeschaffenheit und der Oberflächenform des wärmeleitenden Kerns entstehen können.

Bei einer besonders bevorzugten Ausführungsform der vorliegenden Erfindung ist die Querschnittsform des wärmeleitenden Kerns asymmetrisch ausgeführt. Besonders bevorzugt ist dabei die Asymmetrie des wärmeleitendes Kerns so gestaltet, dass die die Heizeinrichtung durchströmende Luft den wärmeleitenden Kern besser umströmt, beispielsweise dadurch besser umströmt, dass durch die Asymmetrie ein erhöhter Staudruck auf der Zuströmseite der Heizeinrichtung entsteht und dadurch ein verbesserter Wärmeübergang zwischen dem Kern und der ihn umströmenden Luft stattfindet..

Bei einer Ausführungsform der Erfindung schließt die Heizeinrichtung an wenigstens ein den ersten und/oder zweiten Strömungsweg zumindest teilweise begrenzendes Element an oder ist beispielsweise mit den Wärmeaustauschflächen oder aber dem wärmeleitenden Kern verbunden.

Bei einer bevorzugten Ausführungsform ist zwischen dem wärmeleitenden Kern und dem den Strömungsweg begrenzenden Element ein freier Querschnitt gebildet, welcher von einem Teilstrom der die Heizeinrichtung durchströmenden Luft durchströmt wird. Auf diese Weise kann sichergestellt werden, dass auch im Fall einer hohen Wärmeentwicklung bei der Heizeinrichtung eine thermische Überlastung oder sogar eine Beschädigung des an die Heizeinrichtung anschließenden Elementes verhindert werden kann, da die durch den freien Querschnitt strömende Luft die Oberfläche des wärmeieitenden Kerns bzw. der Wärmeaustauschflächen kühlt. Besonders bevorzugt strömt auch der durch den freien Querschnitt strömende Teilstrom der die Heizeinrichtung durchströmenden Luft zumindest im Bereich der Oberfläche des wärmeleitenden Kerns im Wesentlichen laminar, so dass keine oder nur wenige Verwirbelungen der die Heizeinrichtung durchflutenden Luft auftreten.

Bei einer besonders bevorzugten Ausführungsform der vorliegenden Erfindung weist der wärmeleitende Kern einen dritten Strömungsweg auf, welcher innerhalb des wärmeleitenden Kerns angeordnet ist, und welcher von einem den wärmeleitenden Kern erwärmenden Wärmemittel durchströmt wird.

Bei dem Wärmemittel handelt es sich vorzugsweise um ein Fluid, bevorzugt um ein Gas, und besonders bevorzugt um ein Abgas eines Verbrennungsprozesses. Das den wärmeleitenden Kern durchströmende Wärmemittel strömt dabei besonders bevorzugt entlang eines vorgegebenen Strömungspfades, welcher so ausgeführt ist, dass die von dem Wärmemittel auf den wärmeleitenden Kern übertragene Wärme zu einer zumindest teilweise asymmetrischen Temperaturverteilung entlang der Oberfläche des wärmeleitenden Kerns führt.

Vorzugsweise ruft das den wärmeleitenden Kern durchströmende Wärmemittel bei seinem Strom entlang des dritten Strömungsweges einen Temperaturgradienten über den Querschnitt des wärmeleitenden Kerns hervor. Dieser Temperaturgradient führt dazu, dass die Temperaturdifferenz zwischen dem jeweiligen von der Luft umströmten Teilbereich des wärmeleitenden Kernes bzw. den hiermit in Kontakt stehenden Wärmeaustauschflächen und der diesen Teilbereich umströmenden Luft maximal ist und hierdurch ein besonders effizienter Wärmeübergang zwischen dem Wärmemittel und der Luft erfolgt.

Bei einer besonders bevorzugten Ausführungsform ist der Temperaturgradient über den Querschnitt des wärmeleitenden Kerns dabei so orientiert, dass er zu dem Temperaturgradienten der die Heizeinrichtung durchströmenden Luft zumindest teilweise parallel ist. Auf diese Weise wird ermöglicht, dass die zwischen dem jeweils umströmten Teilbereich des wärmeleitenden Kerns und der in diesem Teilbereich strömenden Luft bestehende Temperaturdifferenz entlang des Strömungsweges der Luft durch die Heizeinrichtung nicht divergiert und eine hieraus resultierende ineffiziente Wärmeübertragung erfolgt.

Eine weitere Ausführungsform einer erfindungsgemäßen Einbauanordnung weist auch wenigstens eine Kühleinrichtung für die Luft auf, wobei insbesondere Verdampfer oder entsprechende Einrichtungen wie sie im Stand der Technik bekannt sind verwendet werden.

Gemäß einer weiteren bevorzugten Ausführungsform ist die Heizeinrichtung in einem ersten Strömungsweg angeordnet, wobei es auch im Sinn der vorliegenden Erfindung liegt, die Heizeinrichtung in einem Bypass-Kanal derart anzuordnen, dass in Abhängigkeit der Position der Stelleinrichtung im Hauptkanal die durch das Heizelement strömende Luft, und damit eine Erwärmung der Luft beeinflusst wird. Dies gilt entsprechend auch für die Anordnung einer Kühleinrichtung, wie z. B. eines Verdampfers, Peltier-Element oder dergleichen.

Die Heizeinrichtung ist gemäß einer bevorzugten Ausführungsform in einem vorgegeben Abstand zur Gehäuseaußenwandung angeordnet, wobei gemäß einer weiteren bevorzugten Ausführungsform die Gehäuseaußenwandung wenigstens teilweise entlang einer Trennwand zu einem Verbrennungsmotor geführt wird und gemäß eines bevorzugten Ausführungsbeispieles in diesem Bereich wenigstens eine Heizeinrichtung, insbesondere für die Erwärmung der Luft, angeordnet ist.

Die Wärmetauscherfläche der Heizeinrichtung ist gemäß eines weiteren Ausführungsbeispieles in Bezug auf die Längsmittelachse des Kraftfahrzeuges in einem vorgegebenen Winkel zwischen 0 Grad und 180 Grad, bevorzugt zwischen 0 Grad und 90 Grad angeordnet.

Die Einbauanordnung für eine Klimaanlage mit Heizeinrichtung weist gemäß eines weiteren bevorzugten Ausführungsbeispiels wenigstens einen Lüfter auf, der innerhalb des Gehäuses angeordnet ist und bevorzugt mit elektrischer Energie betrieben wird. Durch den Einsatz eines solchen Lüfters wird die Bewegung der Luft innerhalb des Gehäuses entlang der Strömungswege gefördert.

Der Auslass der Luft erfolgt erfindungsgemäß direkt und/oder indirekt in die Fahrgastzelle des Kraftfahrzeuges, wobei, wie bereits ausgeführt, nicht nur ein einzelner Auslass vorgesehen sein muss, sondern die Verwendung einer Vielzahl von Auslässen im Sinne der vorliegenden Erfindung liegt. Als direkt wird hierbei ein nahezu unmittelbarer Auslass verstanden, der in der Fahrgastzelle mündet. Als indirekt wird insbesondere ein Luftführung verstanden, welche über einen weiteren Strömungsweg mit zusätzlichen Bau- bzw. Stellelementen verbunden ist und anschließend in der Fahrgastzelle mündet.

Die Stelleinrichtung ist vorzugsweise drehbeweglich angeordnet und lässt sich gemäß eines bevorzugten Ausführungsbeispieles wenigstens in zwei unterschiedliche Positionen bewegen, wodurch ein Öffnen oder ein Schließen wenigstens eines Strömungsweges bewirkt wird. Gemäß eines weiteren besonders bevorzugten Ausführungsbeispiels lässt sich die Stelleinrichtung auch stufenlos einstellen, wobei je nach Position der Stelleinrichtung der Anteil an Luft, welcher insbesondere durch die Heizeinrichtung und/oder an der Heizeinrichtung vorbei geführt wird, geändert und damit geregelt und/oder gesteuert werden kann.

Bei der vorliegenden Erfindung ist im ersten Strömungsweg, der Heizeinrichtung nachgeschaltet, eine zweite Stelleinrichtung angeordnet, weiche einen Rückstrom von Luft entgegen der Hauptströmungsrichtung des ersten Strömungsweges und insbesondere durch die Heizeinrichtung im Wesentlichen verhindert. Die zweite Stelleinrichtung unterbindet einen Rückstrom von Luft insbesondere dann, wenn durch eine Öffnung der ersten Stelleinrichtung ein Luftstrom durch die Heizeinrichtung reduziert oder aber vermieden werden soll.

Die zweite Stelleinrichtung ist dabei so ausgeführt, dass sie durch die die Heizeinrichtung bzw. den ersten Strömungsweg durchströmende Luft zumindest teilweise geöffnet wird und hierdurch die Strömung der Luft durch die Heizeinrichtung entlang des ersten Strömungsweges ermöglicht wird.

Dies ist insbesondere deshalb vorteilhaft, da die zweite Stelleinrichtung die Funktion eines Rückströmventils erfüllt, ohne dass hierfür aufwendige oder teure Stellelemente zur Beeinflussung der Stellung der zweiten Stelleinrichtung notwendig würden.

Erfindungsgemäß wirkt ein Stellelement, welches insbesondere in Form einer Feder- oder eines die Schließbewegung der Stelleinrichtung begünstigenden Gewichtes oder dergleichen ausgeführt ist, der Öffnungsbewegung der zweiten Stelleinrichtung beim Strom der Luft durch den ersten Strömungsweg insoweit entgegen, als dass ein vorgegebener Druck der in den ersten Strömungsweg bzw. die Heizeinrichtung einströmenden Luft vorliegen muss, damit eine Öffnung des zweiten Stellelementes erfolgt und die Strömung der Luft durch die Heizeinrichtung ermöglicht wird.

Sowohl die erste Stelleinrichtung als auch die zweite Stelleinrichtung ist besonders bevorzugt aus einer Gruppe von Stelleinrichtungen ausgewählt, die Stellklappen, insbesondere einseitig bzw. mittig drehbar gelagerte Stellklappen, Schwingklappen, Segmentklappen, Flügelklappen, Blenden, insbesondere Irisblenden und dergleichen enthält.

Die Vorrichtung zum Austauschen von Wärme weist ferner im Einlassbereich der Luft eine Einrichtung zum Filtern der Luft auf, um insbesondere bei der Einleitung von Außenluft, die eventuell hiermit eingetragenen Verschmutzungen, wie Staub, Blätter oder dergleichen zurückzuhalten, um somit eine Verschmutzung und frühzeitige Abnutzung der Vorrichtung wenigstens teilweise zu verhindern.

Ferner weist der Ein- und/oder Auslassbereich in der Luft eine Regelungs- und/oder Steuerungseinrichtung auf, welche die Menge der ein- bzw. ausströmenden Luft regelt bzw. steuert.

Gemäß der vorliegenden Erfindung können solche Regelungs- oder Steuerungseinrichtungen beispielsweise Klappen oder Segmente sein, die im Bereich des Ein- und/oder Auslasses angeordnet und mittels einer Verstelleinrichtung in ihrer Position manuell, elektrisch oder dergleichen verändert werden.

Die Vorrichtung weist ferner wenigstens einen Sensor auf, welcher aus einer Gruppe von Sensoren ausgewählt ist, die Temperatur, Druck, Geschwindigkeit eines Mediums oder die Position eines Bauteils und dergleichen bestimmen.

Ein Sensor ist gemäß einer weiteren besonders bevorzugten Ausführungsform mit einer Steuerungseinrichtung verbunden, welche die hierdurch gewonnenen Daten für die Steuerung und/oder Regelung der Vorrichtung verwendet. Solch eine Steuereinrichtung ist im Stand der Technik bekannt und bedarf keiner weiteren Erörterung.

Gemäß einer weiteren besonders bevorzugten Ausführungsform sind die einzelnen Elemente und/oder Baugruppen der Vorrichtung grundsätzlich in Strömungsrichtung hintereinander angeordnet. Gemäß einer weiteren besonders bevorzugten Ausführungsform können jedoch wenigstens einzelne Elemente und/oder Baugruppen aus einem ersten Hauptströmungsweg der Luft herausgenommen werden und beispielsweise mittels eines Bypasses bei Bedarf dem Strömungsweg der Luft wenigstens teilweise oder vollständig zugeschaltet werden.

Ferner liegt es auch im Sinne der vorliegenden Erfindung, mehrere Strömungswege parallel nebeneinander zu schalten, wobei mittels eines Stellgliedes die Durchströmung der einzelnen Strömungswege geöffnet oder geschlossen werden kann.

Gemäß einer besonders bevorzugten Ausführungsform sind die Stellungseinrichtungen in der Art angeordnet, dass insbesondere bei Umgehung der Heizeinrichtung ein Druckabfall innerhalb des Strömungsweges weitgehend reduziert werden kann und durch die kompakte Anordnung der Stellungseinrichtungen der Bauraum im Vergleich zum Stand der Technik reduziert wird.

Die Erfindung und weitere Vorteile werden nachfolgend in mehreren Ausführungsbeispielen erläutert, wobei eine Beschränkung der Erfindung hierdurch nicht erfolgen soll.

Es zeigt:
- Fig. 1: schematische Anordnung einer erfindungsgemäßen Anordnung einer Heizeinrichtung und einer Stelleinrichtung;
- Fig. 2: schematische Darstellung einer alternativen Anordnung einer Heizeinrichtung und einer Stelleinrichtung gemäß der vorliegenden Erfindung;
- Fig. 3a: perspektivische Darstellung einer Wärmetauscherfläche mit Heizkern;
- Fig. 3b: Seitenansicht der Wärmetauscherfläche aus Fig. 3a;
- Fig. 4a: perspektivische Darstellung eines weiteren Ausführungsbeispiels einer erfindungsgemäßen Wärmetauscherfläche mit Wärmeleitkern;
- Fig. 4b: Seitenansicht der Wärmetauscherfläche aus Fig. 4a;
- Fig. 5: perspektivische Darstellung einer Einbauanordnung für eine Klimaanlage mit Heizeinrichtung;
- Fig. 6: Flussschaltbild der Vorrichtung aus Fig. 5,
- Fig. 7: alternative Ausführungsform einer Vorrichtung zum Erwärmen von Luft;
- Fig. 8: das Flussschaltbild der Vorrichtung aus Fig. 7;
- Fig. 9: weitere Ausführungsform einer Vorrichtung zum Erwärmen von Luft;
- Fig. 10: Flussschaltbild der Vorrichtung gemäß Fig. 9;
- Fig.11: weiteres Ausführungsbeispiel der Vorrichtung;
- Fig. 12: Flussschaltbild der Vorrichtung aus Fig. 11;
- Fig. 13: eine perspektivische Darstellung der Vorrichtung gemäß Fig. 11;
- Fig. 14: weitere Ausführungsform einer Vorrichtung zum Erwärmen von Luft;
- Fig. 15: Flussschaltbild der Vorrichtung gemäß Fig. 14;
- Fig. 16: weiteres Ausführungsbeispiel einer Vorrichtung in der Draufsicht;
- Fig. 17: Flussschaltbild der Vorrichtung gemäß Fig. 16;
- Fig. 18: perspektivische Ansicht der Vorrichtung gemäß Fig. 16;
- Fig. 19: alternatives Ausführungsbeispiel einer Vorrichtung zum Erwärmen von Luft;
- Fig. 20: Flussschaltbild der Vorrichtung gemäß Fig. 19;
- Fig. 21: Schnittansichten von Heizeinrichtungen mit wärmeleitenden Kernen unterschiedlicher Querschnitte;
- Fig. 22: eine weitere, bevorzugte Ausführungsform einer Heizeinrichtung einer erfindungsgemäßen Vorrichtung zum Erwärmen von Luft in unterschiedlichen Schnittansichten;
- Fig. 23: eine bevorzugte Ausführungsform einer erfindungsgemäßen Vorrichtung zum erwärmen von Luft in einem ersten Betriebszustand; und
- Fig. 24: die erfindungsgemäße Vorrichtung gemäß Fig. 23 in einem zweiten Betriebszustand.

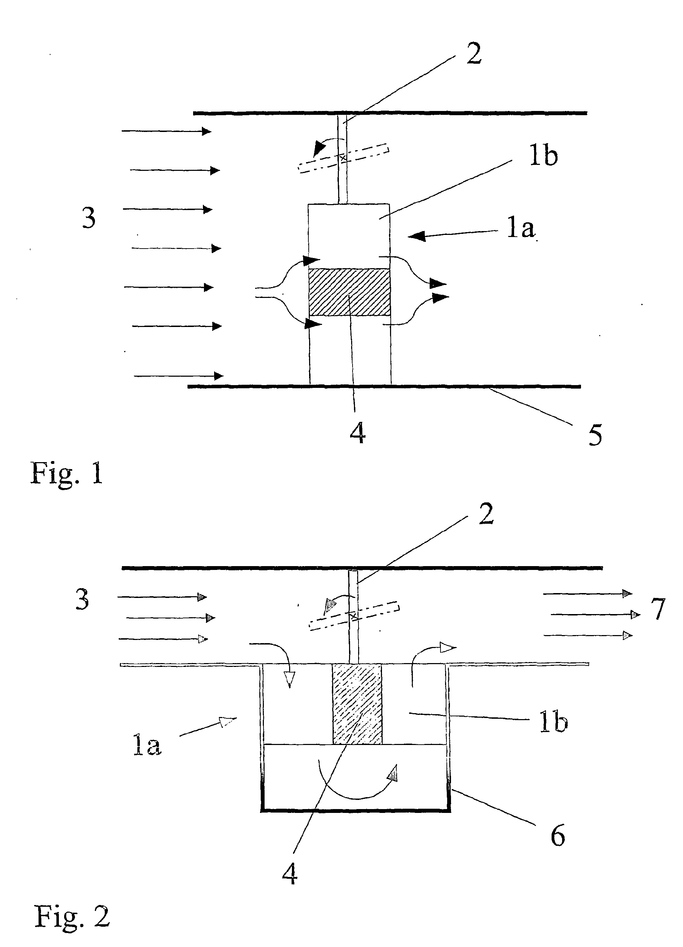

Fig. 1 zeigt eine erste Ausführungsform für die Anordnung einer Heizeinrichtung 1a und einer Stelleinrichtung 2 gemäß der vorliegenden Erfindung für eine Klimaanlage. Dabei weist die Heizeinrichtung einen Wärmeleitkern 4 auf, von dem sich, gemäß der hier dargestellten Ausführungsform, Wärmetauscherflächen 1, die aus Blechen gebildet sind, nach oben und unten erstrecken.

Im Anschluss an die obere Wärmetauscherfläche ist eine Stelleinrichtung 2 angeordnet, die beispielsweise mittels eines Stellmotors in verschiedene Positionen gedreht werden kann, wie dies durch den Pfeil angedeutet ist.

Die Stelleinrichtung 2 kann hierbei gemäß der vorliegenden Erfindung aus einer drehbeweglich gelagerten Verschlussklappe bestehen, die entweder in Bezug auf den Kontaktbereich mit der Wärmetauscherfläche 1 b der Heizeinrichtung 1a anschließt, oder welche eine profilierte Kammstruktur aufweist, die in die Zwischenräume der Wärmetauscherfläche der Heizeinrichtung wenigstens teilweise eingreift.

Durch diese Anordnung wird erreicht, dass die Luft bei geschlossener Stelleinrichtung vollständig durch den freien Strömungsquerschnitt der Heizeinrichtung strömt. Bei geöffneter Stelleinrichtung wird der sogenannte Bypass zur Heizeinrichtung geöffnet, wodurch insbesondere bei Nichtbetrieb der Heizeinrichtung der durch den reduzierten Strömungsquerschnitt verursachte Druckabfall reduziert wird. Hierbei strömt die Luft zu einem großen Teil durch den frei gewordenen Strömungsquerschnitt des Bypasses, wobei jedoch eine Durchströmung der Heizeinrichtung nicht vollständig vermieden wird.

Der Strömungskanal weist ferner die Gehäusewandung 5 auf, mit welcher gemäß der hier dargestellten Ausführungsform die Wärmetauscherfläche der Heizeinrichtung in Kontakt steht.

Fig. 2 zeigt eine alternative Ausführungsform für die Anordnung einer Heizeinrichtung 1a und einer Stelleinrichtung 2. Hierbei ist im Vergleich zu Fig. 1 die Heizeinrichtung um 90 Grad gedreht, so dass der Wärmetauscherkern mit der Stelleinrichtung 2 in geschlossenem Zustand in Berührung kommt. In dieser Position wird die Luft, die entlang den Pfeilen 3 im Strömungsweg geführt wird, durch die freie Oberfläche der Heizeinrichtung geführt und mittels eines Bypasses 6 zurück in den Hauptströmungsweg, der durch die Pfeile 7 angedeutet ist, geführt.

In geöffnetem Zustand der Stelleinrichtung 2 wird eine Durchströmung der Heizeinrichtung 1 a weitgehend vermieden.

Es sei jedoch darauf hingewiesen, dass für den freien Strömungsquerschnitt der Heizeinrichtung weder in Fig. 1 noch in Fig. 2 eine Klappe vorgesehen ist, die den offenen Querschnitt vollständig verschließt.

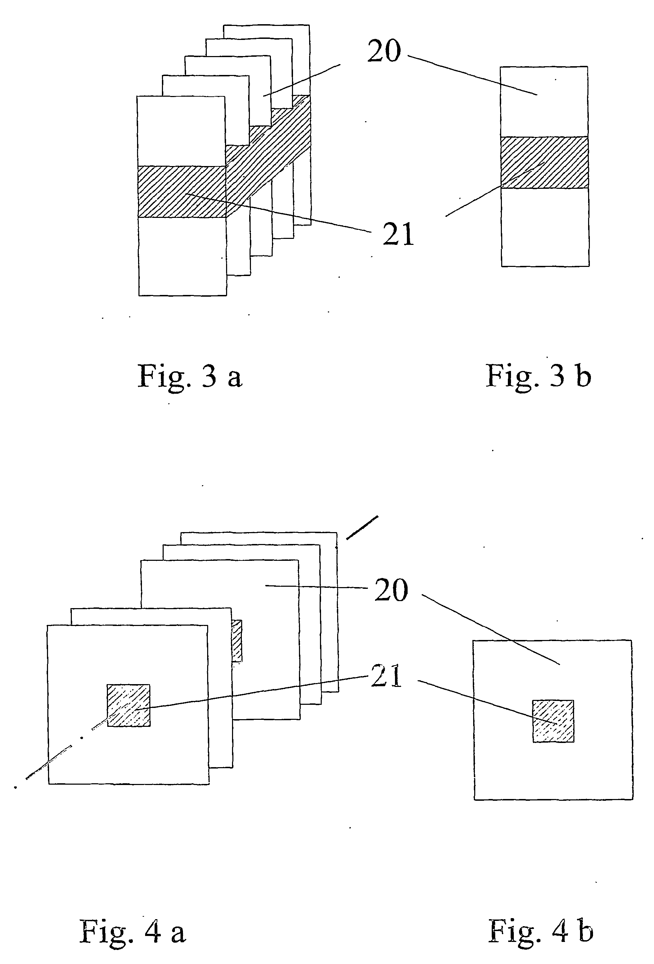

Fig. 3a zeigt eine perspektivische Darstellung einer Heizeinrichtung, wobei insbesondere die Wärmetauscherfläche 20 mit einem wärmeleitenden Kern 21 zu erkennen ist.

Fig. 3b ist die Seitenansicht der in Fig. 3a dargestellten Vorrichtung, in der die wesentliche Ausrichtung der Wärmetauscherflächen 20 und der Kern 21 zu erkennen ist.

Fig. 4a und 4b zeigen eine alternative Ausführungsform für die Anordnung der Wärmetauscherflächen auf einem wärmeleitenden Kern. Hierbei ist der Kern im wesentlichen im Zentrum der hintereinander liegenden quadratischen Bleche angeordnet, wodurch insbesondere eine im Vergleich zu der in den Figuren 3a und 3b dargestellten Version größere Oberfläche für den Austausch von Wärme zur Verfügung gestellt wird.

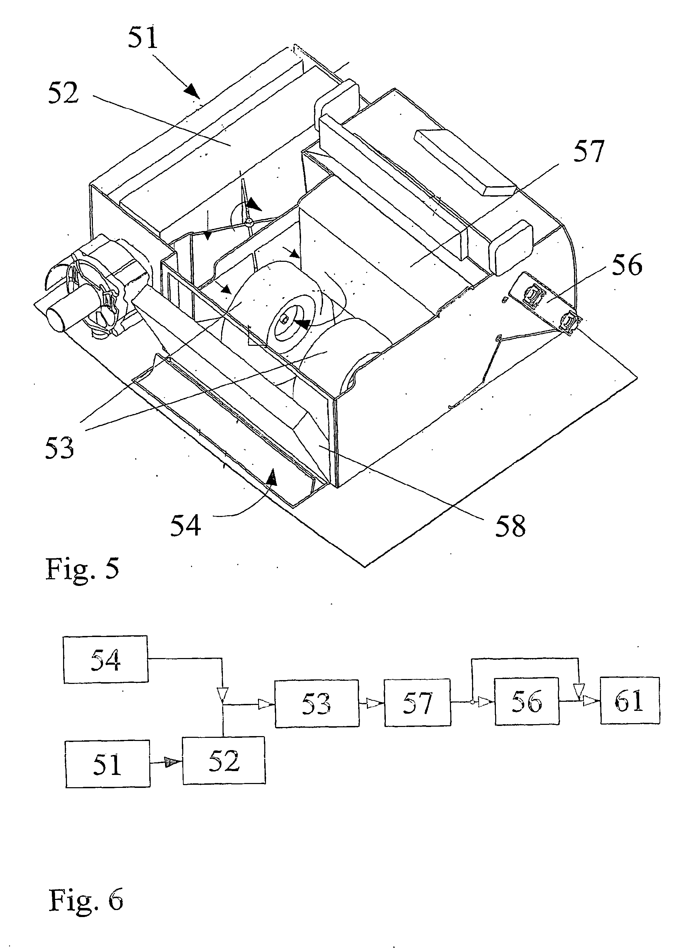

Fig. 5 zeigt eine perspektivische Darstellung einer Vorrichtung zum Temperieren von Luft für eine Klimaanlage, wobei in Fig. 6 ein schematisches Flussschaltbild für die Vorrichtung gemäß Fig. 5 wiedergegeben ist.

Gemäß der hier dargestellten Anordnung wird über ein bzw. zwei Einlässe Frischluft 54 bzw. Umluft 54 in die Vorrichtung geführt. In Fig. 5 ist die Zuführung ebenfalls mit den Bezugszeichen 54 für die Frischluft und 51 für die Umluft dargestellt. An den Einlass der Umluft schließt sich eine Heizeinrichtung 52, insbesondere eine Standheizung, an, die für eine Erwärmung, insbesondere bei stehendem Motor, verwendet wird.

Die der Vorrichtung so zugeführte Luft (Frischluft und/oder Umluft) wird mittels der Gebläse 53 einem Verdampfer 57 zugeführt, um beispielsweise die heiße Außenluft 54 bei sommerlichen Temperaturen abzukühlen. An den Verdampfer 57 schließt sich eine weitere Heizvorrichtung 56 an, die gemäß der in Fig. 5 dargestellten Vorrichtung als elektrische Heizvorrichtung 56 betrieben wird. Erfindungsgemäß besteht jedoch die Möglichkeit, insbesondere bei Nichtverwendung der elektrischen Heizung über einen Bypass die elektrische Heizeinrichtung 56 zu umgehen (siehe Fig. 6), und direkt die aus dem Verdampfer 57 strömende Luft in den Mischraum 61 zu führen.

In Fig. 5 ist dieser Mischraum 61 nur ansatzweise im Anschluss an die elektrische Heizeinrichtung 56 zu erkennen.

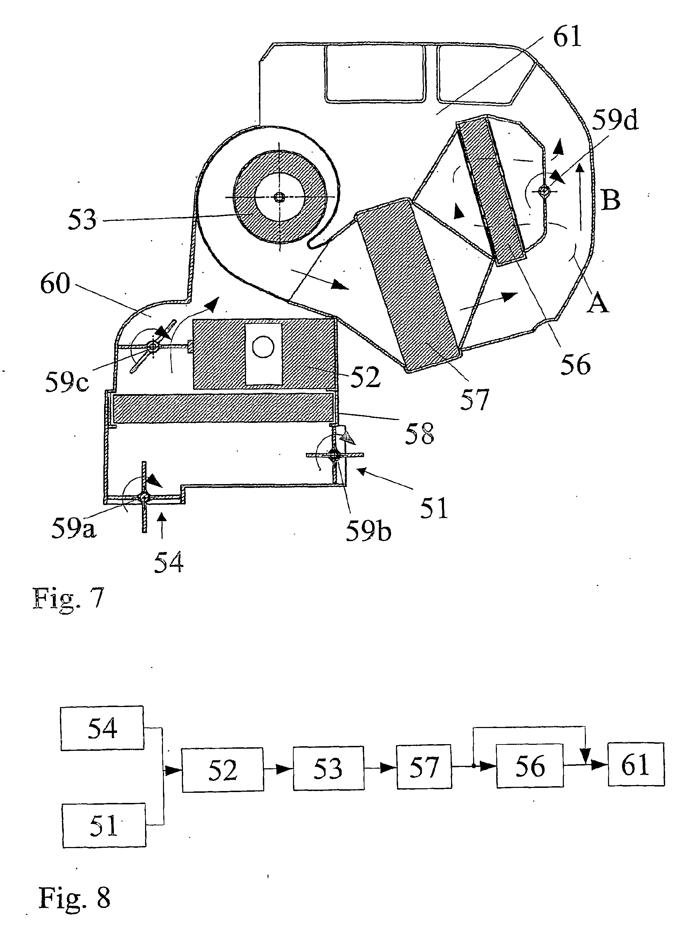

Fig. 7 stellt eine weitere Ausführungsform einer Vorrichtungen dar, wobei in Fig. 8 ein schematisches Flussschaltbild für die in Fig. 7 dargestellte Vorrichtung abgebildet ist.

Entsprechend den vorherigen Ausführungen, kann über zwei Einlässe Frischluft 54 und/oder Umluft 51 der Vorrichtung zugeführt werden. Hierzu sind an den Einlässen jeweils Stelleinrichtungen 59a, 59b vorgesehen, die über eine entsprechende Steuerung in ihrer Position verändert werden können.

Im Anschluss an den Einlassbereich ist ein Filter 58 angeordnet, der insbesondere Verunreinigungen, die über die Einlässe in das System befördert werden, zurückhält. Hieran schließt sich eine Heizeinrichtung, insbesondere eine Standheizung 52 an, die erfindungsgemäß mit einem Bypass 60 ausgerüstet ist. Das Stellglied 59c ermöglicht die Führung der Luft aus dem Einlass direkt über einen Bypass 60 zu einem Gebläse 53, oder, bei geschlossenem Zustand der Stelleinrichtungen 59c, die Erwärmung der Frischluft mit der Standheizung 52. An diesen Bereich anschließend ist das Gebläse 53 angeordnet, welches die Luft zu einem Verdampfer 57 fördert, der vor einer Heizeinrichtung 56 angeordnet ist. Wie bereits zuvor ausgeführt, ist hier auch eine Möglichkeit vorgesehen, den Heizkörper über einen Bypass (vgl. Fig. 8) zu umgehen, wobei eine weitere Stelleinrichtung 59d so angeordnet ist, dass im geöffneten Zustand der mit dem Pfeil A beschriebene Strömungsweg von der Luft durchströmt werden muss, um anschließend in den Mischraum 61 zu gelangen. Bei geschlossenen Stellglied 59d wird die Luft entsprechend dem Pfeil B direkt in den Mischraum 61 geführt.

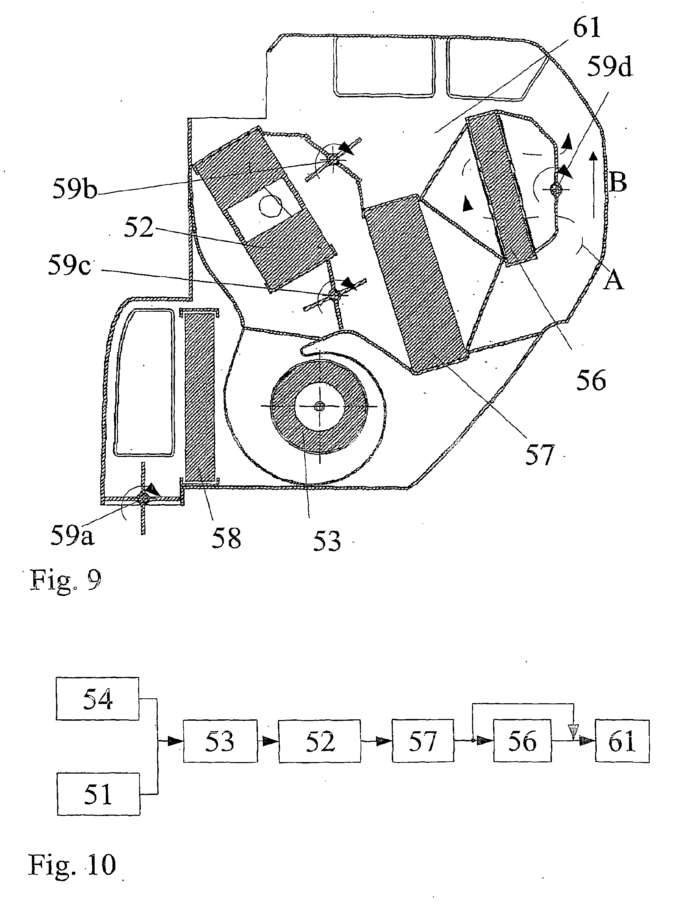

Fig. 9 zeigt ein weiteres Ausführungsbeispiel einer Vorrichtung mit dem in Fig. 10 wiedergegebenen Flussschaltbild.

Hierbei wird Frischluft 54 und/oder Umluft 51 der Vorrichtung zugeführt, wobei die Regelung über die Stelleinrichtungen 59a erfolgt. Hieran anschließend ist ein Filter 58 angeordnet, der eine Verschmutzung der Vorrichtung weitgehend verhindert. Nach dem Filter ist ein Gebläse 53 angeordnet, welches die Luft zur Heizvorrichtung 52 führt. Erfindungsgemäß ist an dieser Position ein Bypass angeordnet, der über eine Stellvorrichtung 59c geöffnet bzw. verschlossen werden kann. Im Anschluss an die Heizvorrichtung 52 ist ein Verdampfer 57 angeordnet, der, wie zuvor erörtert, vor einer Heizeinrichtung 56 positioniert ist. Die Heizeinrichtung 56 wird über ein Stellglied 59d in den Strömungsweg der Luft nach dem Verdampfer zugeschaltet, wenn eine Erwärmung des Luftstroms gewünscht ist. Der Strömungsweg folgt dann dem Pfeil A gemäß Fig. 9, und die Luft gelangt im Anschluss an die Heizeinrichtung in den Mischraum 61. Ist das Stellglied 59 geschlossen, wird die aus dem Verdampfer kommende Luft direkt entlang dem Pfeil B dem Mischraum 61 zugeführt. Gemäß Fig. 9 kann die erwärmte Luft nach der Standheizung auch über ein weiteres Stellglied 59b direkt in den Mischraum 61 geführt werden.

Gemäß einer besonders bevorzugten Ausführungsform ist die Vorrichtung gemäß Fig. 9 im Kraftfahrzeug derart angeordnet, dass insbesondere die Strömung des Fahrtwindes in der Art ausgenutzt wird, dass der Einlass der Vorrichtung senkrecht zur Strömungsrichtung des Fahrtwindes so angeordnet ist, dass die Luft bei Fahrt des Kraftfahrzeugs in die Vorrichtung hineinströmt.

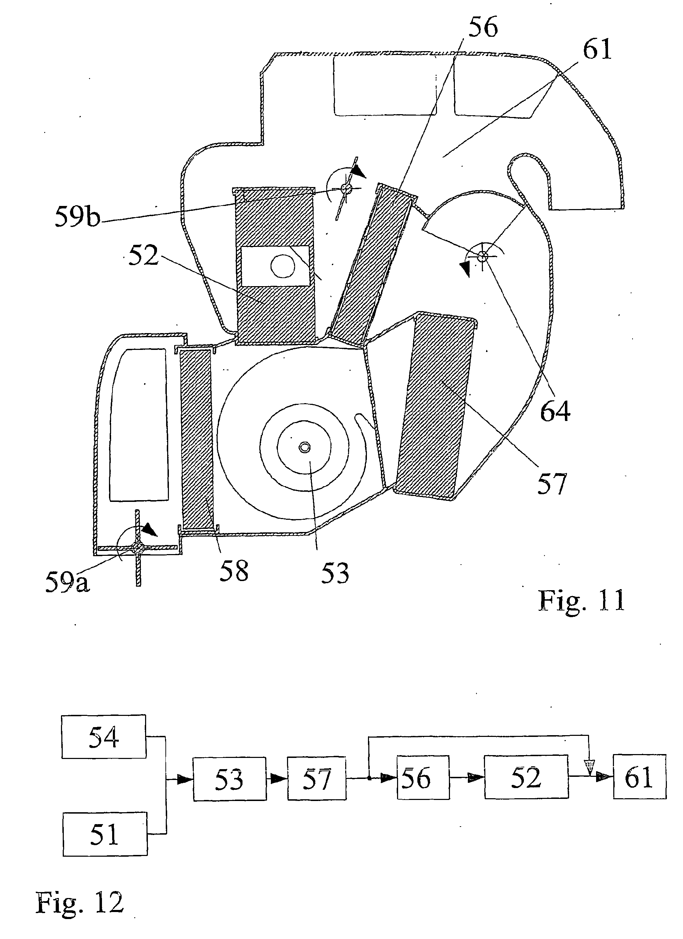

Fig. 11 zeigt eine weiteres Ausführungsbeispiel bei der über einen Einlass Frischluft 54 oder Umluft 51 der Vorrichtung zugeführt wird. Nach der Filterung wird die Luft dem Gebläse 53 zugeführt und durch die Wärmetauscherfläche des Verdampfers 57 gefördert. Im Anschluss an dem Verdampfer wird die Luft entweder durch die Heizeinrichtung 56 und die anschließenden Standheizung 52 transportiert, oder kann mittels eines Bypasses und dem Stellglied 64 direkt in den Mischraum 61 transportiert werden. Auch der Abzweig der Luft nach der Heizeinrichtung 56 kann gemäß Fig. 11 mittels der Stelleinrichtung 59b erfolgen. Auch hierbei wird die Luft im Anschluss in den Mischraum 61 transportiert.

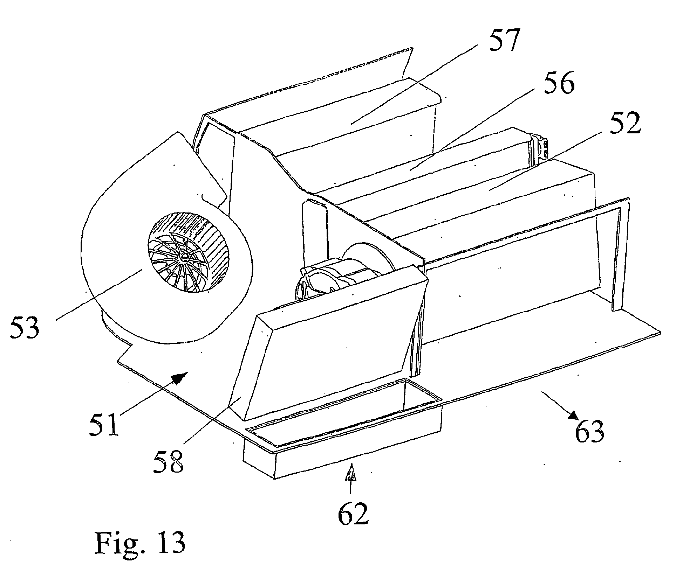

Fig. 13 ist eine perspektivische Darstellung der Vorrichtung gemäß Fig. 11, wobei Frischluft über den Einlass 62 und den Filter 58 dem Gebläse 53 zugeführt wird. Umluft wird direkt über den Zwischenraum 51 dem Gebläse 53 zugeführt. Im Anschluss an das Gebläse ist eine elektrische Heizeinrichtung 56 und die Standheizung 52 angeordnet.

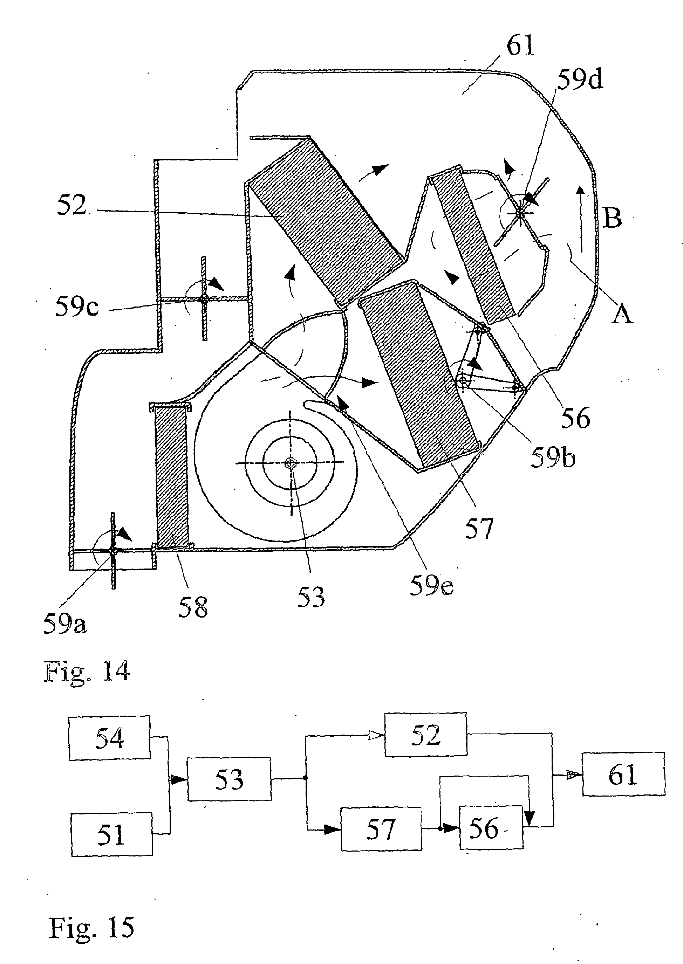

Fig. 14 und Fig. 15 zeigen ein weiteres Ausführungsbeispiel für eine Klimaanlage, bei welchem die Frischluft 54 und/oder die Umluft 51 über einen Einlass direkt der Standheizung 52 und, im Anschluss hieran, dem Mischraum 61 oder alternativ dem Verdampfer 57 und einer mit Bypass ausgerüsteten Heizeinrichtung 56, dem Mischraum 61 zugeführt wird, wie das insbesondere dem schematischen Flussschaltbild gemäss Fig. 15 zu entnehmen ist.

Fig. 14 zeigt den Einlassbereich mit einer Stelleinrichtung 59a und eine weitere Stelleinrichtung 59c, weiche im Anschluss an den Einlasskanal angeordnet ist. Vom Einlasskanal wird die Luft durch den Filter 58 zum Gebläse 53 geführt und kann entweder zur Standheizung 52 oder zum Verdampfer 57 geführt werden. Im Anschluss an den Verdampfer 57 ist eine Stelleinrichtung 59b angeordnet, mittels derer die Luft entweder zur Heizeinrichtung 56 oder direkt zum Mischraum 61 geführt werden kann. Im Anschluss an die Heizeinrichtung 56 ist eine Stelleinrichtung 59d angeordnet, über welche erwärmte Luft in den Mischraum 61 geleitet werden kann.

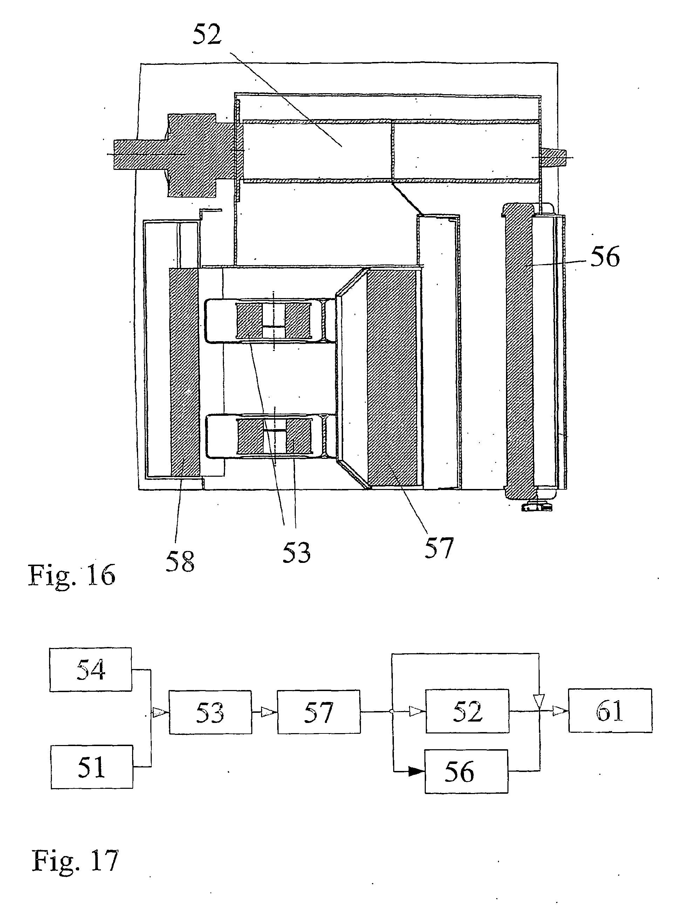

Fig. 16 und Fig. 17 zeigen eine weitere Ausführungsform einer Vorrichtung für eine Klimaanlage, wobei entsprechend den vorherigen Darstellungen Luft über einen Einlassbereich und einen Filter 58 den beiden Gebläsen 53 zugeführt wird. Von hier aus wird der Luftstrom dem Verdampfer 57 zugeführt, wobei gemäß der hier dargestellten Ausführungsform der Luftstrom entweder direkt dem Mischraum zugeführt werden kann, der über eine Standheizung 52 oder mittels einer Heizeinrichtung 56 erwärmt, dem Mischraum 61 zugeführt wird.

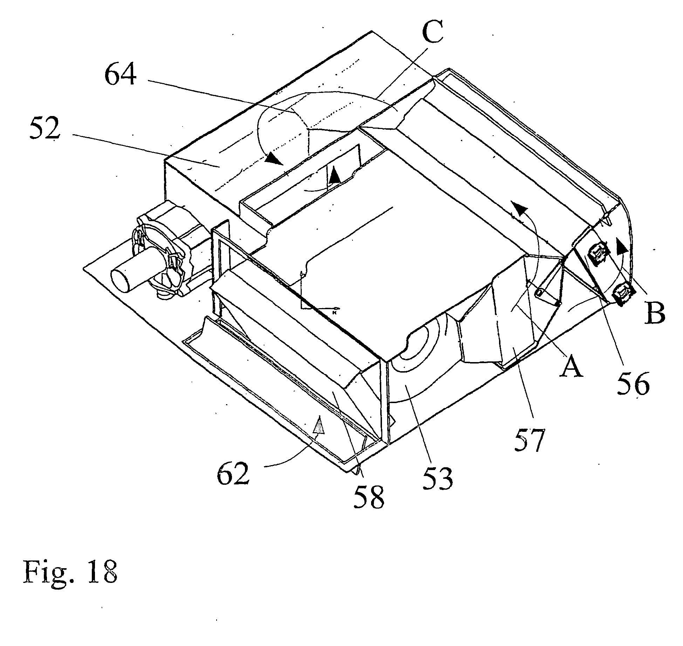

Fig. 18 ist die perspektivische Darstellung der Vorrichtung gemäß den Figuren 14 und 15, wobei der Einlassbereich 62, der Filter 58, eines der Gebläse 53, der Verdampfer 57 und die Heizeinrichtung 56 und die Standheizung 52 zu erkennen sind.

Gemäß der Fig. 18 sind ferner unterschiedliche Luftführungswege mittels den Pfeilen A, B und C wiedergegeben, wobei insbesondere der Pfeil A für die Luftführung einer gekühlten Luft nach dem Verdampfer 57 ohne die Durchströmung der Heizeinrichtung 56 wiedergibt. Der Pfeil B gibt symbolisch die Führung der Luft durch die Heizeinrichtung 56 wieder. Im Anschluss hieran wird die Luft über die Standheizung 52 geführt, wobei durch ein Trennelement 64 die Luft zweimal durch die, Wärmetauscherflächen geführt wird. Im Anschluss an die Standheizung wird die Luft über den Auslassbereich am Ende des Pfeils C abgeleitet.

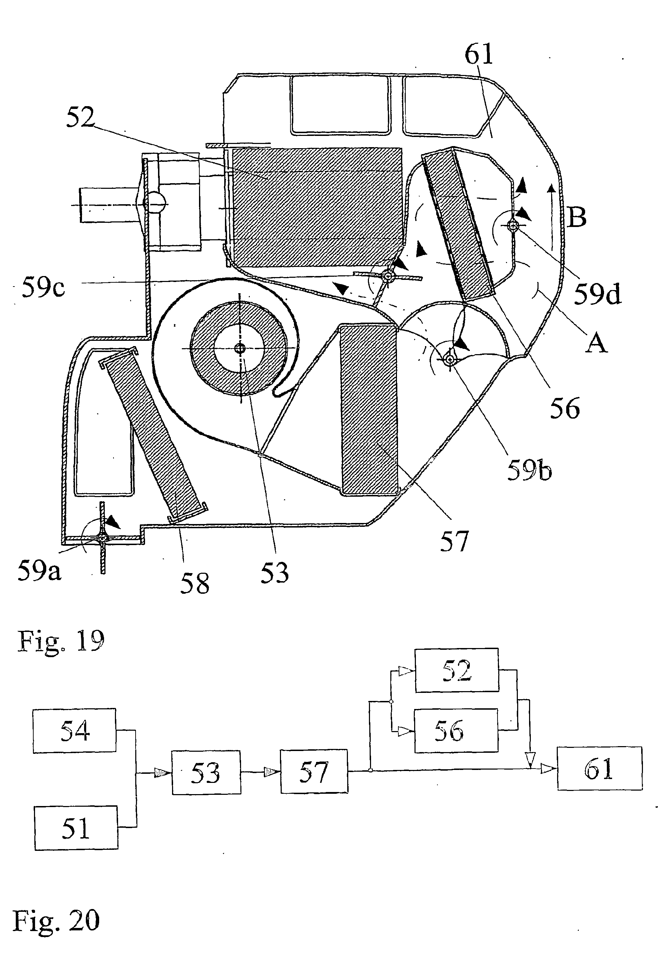

In den Figuren 19 und 20 ist eine alternative Ausführungsform der Vorrichtung abgebildet, wobei wiederum die Frischluft 54 oder Umluft 51 über einen Filter 58 dem Gebläse 53 zugeführt wird. Im Anschluss hieran ist der Verdampfer 57 angeordnet. An dem Verdampfer 57 ist eine Stelleinrichtung 59b angeordnet, mittels welcher die Luft direkt dem Mischraum 61 zugeführt werden kann. Alternativ erfolgt die Luftführung in den Bereich der Standheizung 52 bzw. der elektrischen Heizeinrichtung 56, wobei die Luftführung zu dem jeweiligen Aggregat mittels der Stelleinrichtung 59b und 59d erfolgt. Gemäß der Fig. 19 kann die Heizeinrichtung 56 auch nach dem Verdampfer in den Strömungsweg der Luft zwischen Verdampfer 57 und Mischraum 61 eingeschaltet werden, wodurch die Heizeinrichtung bei entsprechender Positionierung der Stelleinrichtung 59d zweimal durchflutet wird. Im Anschluss an das Stellglied 59 ergibt sich ferner die Möglichkeit, unter Umgehung der Heizeinrichtung 56 direkt in die Standheizung 52 den Luftstrom zu führen, und hiernach den Luftstrom in den Mischraum 61 zu leiten.

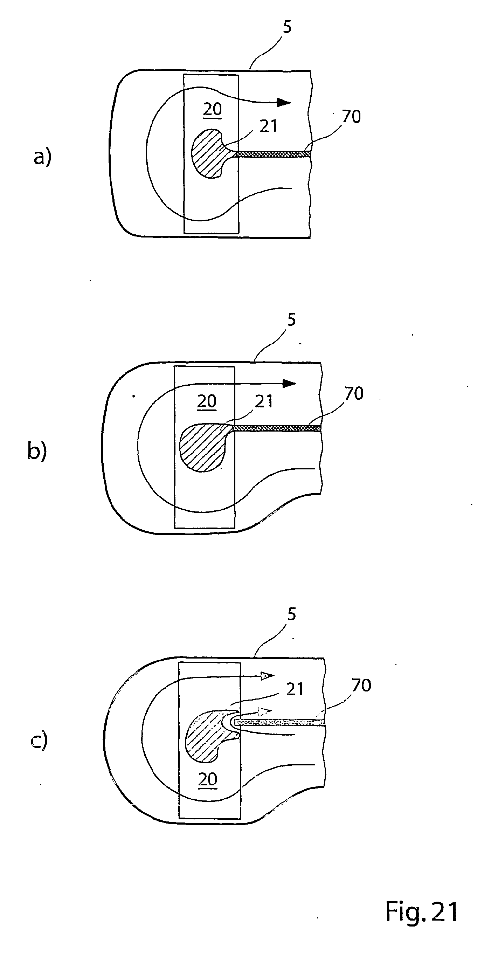

Fig. 21 zeigt Schnittdarstellungen von unterschiedlichen Heizeinrichtungen der erfindungsgemäßen Vorrichtung, wobei der wärmeleitende Kern 21 jeweils verschiedene Querschnittsformen aufweist. An die erfindungsgemäße Heizvorrichtung schließt sich ein Begrenzungselement 70 an, welches den Strömungsweg durch die Heizeinrichtung zumindest teilweise begrenzt bzw., wie im vorliegenden Fall, eine zweifache Durchflutung der Heizeinrichtung mit der zu erwärmenden Luft bewirkt.

Der Strömungsweg der zu erwärmenden Luft durch die Heizeinrichtung wird in Fig. 21 jeweils durch die Pfeile dargestellt, wobei die Heizeinrichtung innerhalb eines durch Wandungen 5 begrenzten Gehäuses angeordnet ist.

Fig. 21 a zeigt eine Anordnung, bei der der wärmeleitende Kern 21, welcher mit den Wärmeaustauschflächen 20 in einer wärmeleitenden Verbindung steht, mit dem Begrenzungselement 70 in Kontakt ist. Weiterhin ist der wärmeleitende Kern 70 symmetrisch ausgeführt, so dass der Kern von der die Heizeinrichtung durchströmenden Luft im wesentlichen symmetrisch umströmt wird.

Fig. 21b zeigt demgegenüber eine Heizeinrichtung, bei der der wärmeleitende Kern 21 asymmetrisch ausgeführt ist, wobei der Kern auch in diesem Fall von einer im wesentlichen laminaren Luftströmung umströmt wird. Gegenüber der Ausführungsform gemäß Fig. 21 a hat diese Ausführungsform jedoch den Vorteil, dass durch die asymmetrische Ausführung des wärmeleitenden Kerns auf der Zustromseite eine bessere Umströmung des wärmeleitenden Kerns, insbesondere durch die Ausbildung eines Staudruckes, erfolgt.

Der Wärmeübergang zwischen dem wärmeleitenden Kern und der die Heizeinrichtung durchströmenden Luft wird somit durch die asymmetrische Ausführung des wärmeleitenden Kerns verbessert, ohne die Gesamtabmessungen der Heizeinrichtung gegenüber der Ausführungsform gemäß Fig. 21a wesentlich zu verändern, insbesondere die Wärmeaustauschfläche zu vergrößern.

Fig. 21c zeigt eine weiter Ausführungsform eines wärmeleitenden Kerns, bei der zur Vermeidung von Materialbeschädigungen an dem Begrenzungselement 70 zwischen diesem Begrenzungselement und dem wärmeleitenden Kern kein Kontakt besteht, sondern ein freier Querschnitt gebildet ist, welcher von einem Teilstrom der die Heizeinrichtung durchströmenden Luft durchströmt wird.

Auf diese Weise erfolgt durch eine in diesem Bereich hervorgerufene Kühlung des Kernes bzw. des Begrenzungselementes durch die Luft des Teilstromes eine Reduzierung der thermischen Belastung des Begrenzungselementes im Bereich der Heizeinrichtung, so dass die Effizienz der Wärmeübertragung auch dadurch weiter gesteigert werden kann, dass der wärmeleitende Kern im Vergleich zu den Ausführungsformen gemäß den Figuren 21 a und b eine erhöhte Temperatur aufweisen kann, ohne dass es zu der Gefahr von Materialbeschädigungen des Begrenzungselementes kommt.

Bei der Ausführungsform gemäß Fig. 21 c ist der wärmeleitende Kern 21 zudem ebenfalls asymmetrisch entsprechend dem Kern in Fig. 21 b ausgeführt, so dass auch hier durch eine verbesserte Umströmung des wärmeleitenden Kernes 21 ein verbesserter Wärmeübergang zwischen der Heizeinrichtung und der diese durchströmenden Luft erreicht wird.

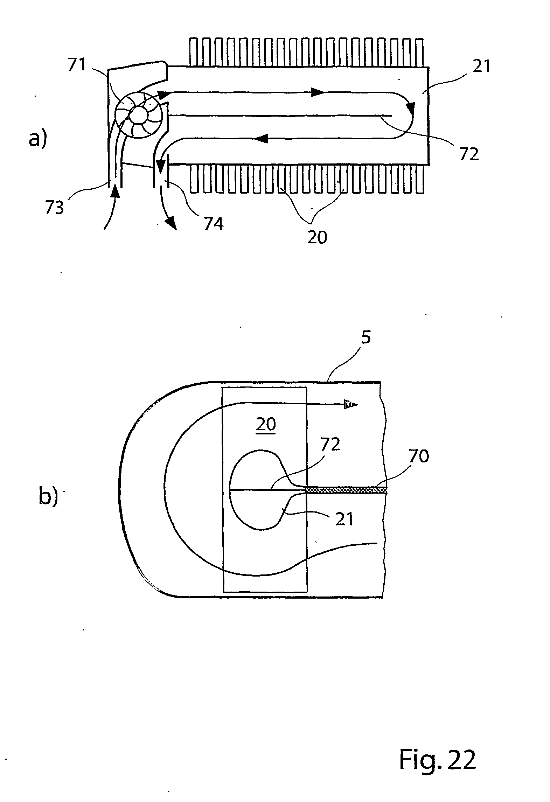

Fig. 22 zeigt verschiedene Schnittansichten einer weiteren, besonders vorteilhaften Heizeinrichtung einer erfindungsgemäßen Vorrichtung. Demnach weist der wärmeleitende Kern 21 einen dritten Strömungsweg auf, welcher in Fig. 22a durch die Pfeillinie dargestellt ist. Über den Einlass 73 gelangt dabei Frischluft in einen Brennraum 71 der Heizeinrichtung, in dem ein Verbrennungsprozess stattfindet, wobei das hierbei entstehende heiße Abgas in den wärmeleitenden Kern 21 eingeleitet wird, so dass der Kern in seiner Längsrichtung von dem Abgas zweimal im wesentlichen entgegengesetzt parallel durchströmt wird und das Abgas hiernach aus der Heizeinrichtung über den Auslass 74 austritt.

Der dritte Strömungsweg wird dabei durch das Trennelement 72 in der Art begrenzt, dass hierdurch das heiße Abgas den wärmeleitenden Kern 21 auf seiner ganzen Länge durchströmt, wobei der in der Fig. 22a dargestellte obere Bereich des wärmeleitenden Kerns durch die Nähe zur Brennkammer 71 von dem zunächst heißeren Abgas durchströmt wird, wodurch der obere Bereich des wärmeleitenden Kernes stärker erwärmt wird als der untere. Es bildet sich somit ein Temperaturgradient aus, der zumindest teilweise in Richtung vom oberen Bereich der Heizeinrichtung zum unteren Bereich der Heizeinrichtung orientiert ist.

Der wärmeleitende Kern 21 ist zudem mit Wärmeaustauschflächen 20 im wesentlichen umgeben, welche mit der Oberfläche des wärmeleitenden Kerns 21 wärmeleitend verbunden sind.

Fig. 22b zeigt eine Schnittsansicht der Heizeinrichtung gemäss Fig. 22a, in der das Trennelement 72 innerhalb des wärmeleitenden Kerns 21 erkennbar ist, wobei die Temperatur des Gases im Bereich oberhalb des Trennelementes 72 gegenüber der Temperatur des Gases im unteren Bereich des wärmeleitenden Kernes erhöht ist, so dass die die Heizeinrichtung durchströmende Luft bei der Durchflutung der Heizeinrichtung stets einer maximalen Temperaturdifferenz zwischen dem wärmeleitenden Kern und der Lufttemperatur im jeweiligen Teilbereich des wärmeleitenden Kerns ist.

Auf diese Weise kann ebenfalls eine erhöhte Effizienz bei der Wärmeübertragung zwischen dem den wärmeleitenden Kern durchströmenden heißen Gas und der die Heizeinrichtung durchströmenden Luft erreicht werden.

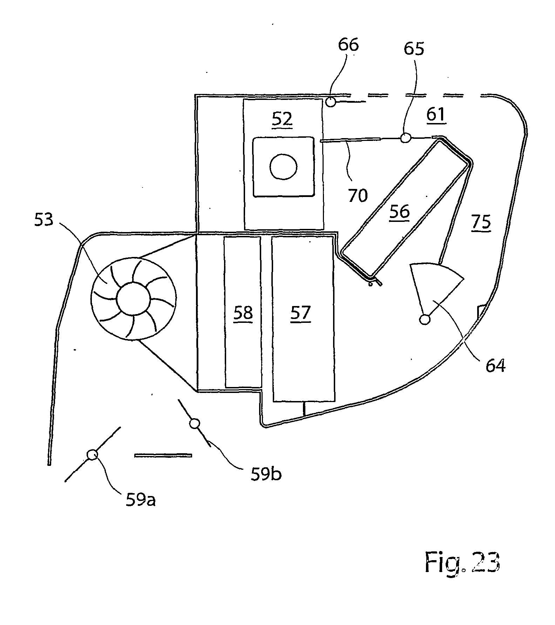

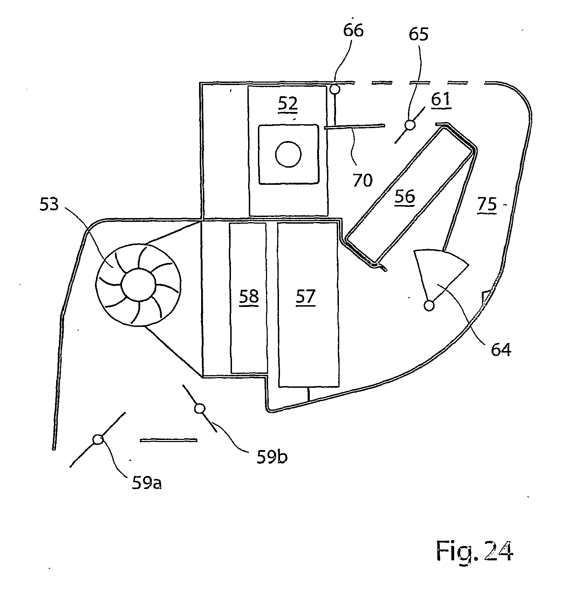

Die Figuren 23 und 24 zeigen eine weitere Ausführungsform einer erfindungsgemäßen Vorrichtung, welche Lufteinlassklappen 59a und 59b für Frisch- bzw. Umluft aufweist. Die in die Vorrichtung einströmende Luft wird durch eine Fördereinrichtung 53 zunächst durch ein Filterelement 58 zur Reinigung der Luft und, hieran anschließend, durch einen Verdampfer 57 gefördert.

Hiernach wird durch die Stelleinrichtung 64, welche segmentartig ausgeführt ist, eine Regelung der in den Bypass 75 bzw. die Heizvorrichtung 56 eingeleiteten Luftmengen vorgenommen. Der Bypass 75 mündet dabei in die Mischkammer 61, so dass durch die Stelleinrichtung 64 die Möglichkeit gegeben ist, ausschließlich durch den Verdampfer 57 gekühlte Luft in die Mischkammer 61 einzuleiten, von der aus die Luft sodann über bekannte Verteileinrichtungen in den Fahrgastraum des Kraftfahrzeuges eingeleitet wird.

Die durch die Stelleinrichtung 64 in die Heizvorrichtung 56 eingeleitete Luft durchströmt diese Heizvorrichtung, wonach durch die Stelleinrichtung 65, welche gemäß Fig. 23 in der geschlossenen Stellung ist, der Luftstrom durch die Standheizung 52 hindurchgeleitet und die hierdurch erwärmte Luft über diesen Weg in die Mischkammer 61 gelangt. Die zweite Stelleinrichtung 66 ist dabei so ausgeführt, dass diese allein durch die die Heizeinrichtung 52 durchströmende Luft in den geöffneten Zustand übergeht.

Bei geöffneter Stelleinrichtung 65, wie sie in Fig. 24 gezeigt ist, findet ein direkter Einstrom der durch die Heizvorrichtung 56 erwärmten Luft in die Mischkammer 61 statt, wodurch der Druck der die Heizeinrichtung 52 durchströmenden Luft derart reduziert wird, dass die zweite Stelleinrichtung 66 in ihren geschlossenen Zustand übergeht, so dass eine Durchflutung der Heizeinrichtung 52 nicht im wesentlichen vollständig unterbunden wird.

Der Verschluss der zweiten Stelleinrichtung 66 wird bei geöffneter erster Stelleinrichtung 65 zudem dadurch begünstigt, dass die zweite Stelleinrichtung 66 durch eine entgegen der Hauptströmungsrichtung durch die Heizeinrichtung 52 strömende Luftbewegung nach Art eines Rückschlagventils in den geschlossenen Zustand übergeht und auf diese Weise ein Rückstrom von Luft aus der Mischkammer 61 in die Heizeinrichtung 52 vermieden wird

## Patentansprüche

1. Einbauanordnung für eine Klimaanlage mit Heizeinrichtung, insbesondere für Kraftfahrzeuge, mit
wenigstens einem Gehäuse, in welchem Luft in einem wenigstens teilweise vorgegebenen Strömungsweg geführt wird und
welches wenigstens eine erste Heizeinrichtung (56) und wenigstens eine Stelleinrichtung (64) aufweist, wobei die erste Heizeinrichtung (56) in einem ersten Strömungsweg und die Stelleinrichtung (64) wenigstens teilweise in einem zweiten Strömungsweg angeordnet ist und die Stelleinrichtung (64) in wenigstens einer Stellung die Durchströmung der ersten Heizeinrichtung (56) weitgehend vollständig bewirkt, wobei eine zweite Heizeinrichtung (52) im ersten Strömungsweg des Gehäuses vorgesehen ist, **dadurch gekennzeichnet, dass** im ersten Strömungsweg, der zweiten Heizeinrichtung (52) nachgeschaltet eine zweite Stelleinrichtung (66) angeordnet ist, welche einen Strom von Luft entgegen der Hauptströmungsrichtung des ersten Strömungswegs im wesentlichen verhindert, wobei die zweite Stelleinrichtung (66) so ausgeführt ist, dass sie durch die, die Heizeinrichtung in der Hauptströmungsrichtung durchströmende Luft zumindest teilweise geöffnet wird und die zweite Stelleinrichtung (66) ein Stellelement aufweist, welches einer Öffnungsbewegung der Stelleinrichtung zumindest teilweise entgegenwirkt.

2. Einbauanordnung für eine Klimaanlage mit Heizeinrichtung, gemäß Anspruch 1, **dadurch gekennzeichnet, dass**
das Gehäuse wenigstens einen Einlass und wenigstens einen Auslass für die Luft aufweist.

3. Einbauanordnung für eine Klimaanlage mit Heizeinrichtung, gemäß wenigstens einem der vorstehenden Ansprüche, **dadurch gekennzeichnet, dass**
die zweite Heizeinrichtung (52) aus einer Gruppe von Heizeinrichtungen ausgewählt ist, welche Wärmetauscher, CO₂-Wärmepumpen, Abgaswärme nutzende Heizungen, Brennstoffheizung, Kondensatoren, Standheizungen, elektrische Heizungen, PTC-Heizungen und dergleichen enthält.

4. Einbauanordnung für eine Klimaanlage mit Heizeinrichtung, gemäß wenigstens einem der vorstehenden Ansprüche, **dadurch gekennzeichnet, dass**
die zweite Heizeinrichtung (52) einen Wärme leitenden Kern aufweist, dessen Wämletauscherfläche durch Bleche gebildet wird, welche in einem vorgegebenen Winkel zur Hauptausdehnungsrichtung des Kerns an dessen Oberfläche wärmeleitend angeordnet sind

5. Einbauanordnung für eine Klimaanlage mit Heizeinrichtung, gemäß Anspruch 4, **dadurch gekennzeichnet, dass**
zumindest ein Teilbereich der Oberfläche des wärmeleitenden Kerns von der Luft umströmt wird.

6. Einbauanordnung für eine Klimaanlage mit Heizeinrichtung, gemäß Anspruch 5, **dadurch gekennzeichnet, dass**
der Querschnitt des wärmeleitenden Kerns dergestalt ist, dass die Strömung der Luft zumindest entlang eines Teilabschnittes der Oberfläche des wärmeleitenden Kerns im wesentlichen laminar ist.

7. Einbauanordnung für eine Klimaanlage mit Heizeinrichtung, gemäß einem der Ansprüche 4 bis 6, **dadurch gekennzeichnet, dass**
die Querschnittsform des wärmeleitenden Kernes asymmetrisch ist.

8. Einbauanordnung für eine Klimaanlage mit Helzeinrichtung, gemäß einem der Ansprüche 4 bis 7, **dadurch gekennzeichnet, dass**
zwischen dem wärmeleitenden Kern und einem an die Heizeinrichtung anschließende, den ersten Strömungsweg zumindest teilweise begrenzenden Elementes ein freier Querschnitt gebildet ist, welcher von einem Teil der die Heizeinrichtung durchströmenden Luft durchströmt wird.

9. Einbauanordnung für eine Klimaanlage mit Heizeinrichtung, gemäß einem der Ansprüche 4 bis 8, **dadurch gekennzeichnet, dass**
Innerhalb des wärmeleitenden Kerns einen dritter Strömungsweg angeordnet ist, welcher von einem Wärmemittel durchströmt wird;

10. Einbauanordnung für eine Klimaanlage mit Heizeinrichtung, gemäß Anspruch 9, **dadurch gekennzeichnet, dass**
das Wärmemittel ein Fluid, bevorzugt ein Gas und besonders bevorzugt ein Abgas eines Verbrennungsprozesses ist.

11. Einbauanordnung für eine Klimaanlage mit Heizeinrichtung, gemäß Anspruch 9 oder 10, **dadurch gekennzeichnet, dass**
das den wärmeleitenden Kern durchströmende Wärmemittel einen Temperaturgradienten über den Querschnitt des Kerns hervorruft.

12. Einbauanordnung für eine Klimaanlage mit Heizeinrichtung, gemäß einem der Ansprüche 4 bis 11, **dadurch gekennzeichnet, dass**
ein Temperaturgradient des wärmeleitenden Kerns zu einem Temperaturgradienten der die Heizeinrichtung durchströmenden Luft zumindest teilweise parallel ist.

13. Einbauanordnung für eine Klimaanlage mit Heizeinrichtung, gemäß wenigstens einem der vorstehenden Ansprüche, **dadurch gekennzeichnet, dass**
die Bleche der Wärmetauscherfläche eine Grundform aufweisen, die aus einer Gruppe von Formen ausgewählt ist, welche Quadrate, Rechtecke, Kreise, Elipsen, Polygone, Mischformen hiervon und dergleichen enthält.

14. Einbauanordnung für eine Klimaanlage mit Heizeinrichtung, gemäß wenigstens einem der vorstehenden Ansprüche, **dadurch gekennzeichnet, dass**
die zweite_Heizeinrichtung (52) in einem Bypasskanal angeordnet ist.

15. Einbauanordnung für eine Klimaanlage mit Heizeinrichtung, gemäß wenigstens einem der vorstehenden Ansprüche, **dadurch gekennzeichnet, dass**
die Wärmetauschfläche der zweitenHeizeinrichtung (52) einen vorgegebenen Winkel zur Längsachse des Kraftfahrzeuges einnimmt.

16. Einbauanordnung für eine Klimaanlage mit Heizeinrichtung, gemäß wenigstens einem der vorstehenden Ansprüche, **dadurch gekennzeichnet, dass**
in dem Gehäuse wenigstens ein Lüfter (53), insbesondere ein elektrischer Lüfter vorgesehen ist, welcher die Bewegung der Luft durch die Vorrichtung innerhalb wenigstens eines Strömungsweges fördert.

17. Einbauanordnung für eine Klimaanlage mit Heizeinrichtung, gemäß wenigstens einem der vorstehenden Ansprüche, **dadurch gekennzeichnet, dass**
durch den Auslass die Luft direkt und/oder indirekt in die Fahrgastzelle eines Kraftfahrzeuges geleitet wird.

18. Einbauanordnung für eine Klimaanlage mit Heizeinrichtung, gemäß wenigstens einem der vorstehenden Ansprüche, **dadurch gekennzeichnet, dass**
die Stelleinrichtung (64) in wenigstens zwei Positionen gebracht werden kann.

19. Einbauanordnung für eine Klimaanlage mit Heizeinrichtung, gemäß wenigstens einem der vorstehenden Ansprüche, **dadurch gekennzeichnet, dass**
die Stelleinrichtung (64) stufenlos einstellbar ist, wobei je nach Position der Anteil an Luft, welcher durch die Heizeinrichtung und/oder an der Heizeinrichtung vorbei geführt wird geändert und insbesondere geregelt und/oder gesteuert wird.

20. Einbauanordnung für eine Klimaanlage mit Heizeinrichtung, gemäß wenigstens einem der vorstehenden Ansprüche, **dadurch gekennzeichnet, dass**
die Stelleinrichtungen (64, 66) aus einer Gruppe von Stelleinrichtungen ausgewählt sind, die Klappen, Schwingklappen, Segmentklappen, Flügelklappen, Blenden, insbesondere Irisblenden und dergleichen enthält.

21. Einbauanordnung für eine Klimaanlage mit Heizeinrichtung, gemäß wenigstens einem der vorstehenden Ansprüche, **dadurch gekennzeichnet, dass**
eine Einrichtung (58) zum Filtern von Luft, insbesondere im Bereich des Einlasses vorgesehen ist.

22. Einbauanordnung für eine Klimaanlage mit Heizeinrichtung, gemäß wenigstens einem der vorstehenden Ansprüche, **dadurch gekennzeichnet, dass**
an dem wenigstens einem Ein- und/oder Auslass der Luft eine Regelungs- oder Steuerungseinrichtung (59a, 59b) vorgesehen sind, welche insbesondere die Menge der durchströmenden Luft regelt bzw. steuert.

23. Einbauanordnung für eine Klimaanlage mit Heizeinrichtung, gemäß wenigstens einem der vorstehenden Ansprüche, **dadurch gekennzeichnet, dass**
die Luft wenigstens teilweise entlang einer Trennwand zu einem Verbrennungsmotor geführt wird, und dass insbesondere in diesem Bereich wenigstens eine Heizeinrichtung angeordnet ist.

24. Einbauanordnung für eine Klimaanlage mit Heizeinrichtung, gemäß wenigstens einem der vorstehenden Ansprüche, **dadurch gekennzeichnet, dass**
die Vorrichtung wenigstens einen Sensor aufweist, welcher aus einer Gruppe von Sensoren ausgewählt ist, welche Temperatur, Druck, Geschwindigkeit wie z.B. die Strömungsgeschwindigkeit eines Mediums oder die Position eines Bauteils bestimmen.

25. Einbauanordnung für eine Klimaanlage mit Heizeinrichtung, gemäß wenigstens einem der vorstehenden Ansprüche, **dadurch gekennzeichnet, dass**
die einzelnen Elemente und/oder Baugruppen der Vorrichtung grundsätzlich im Strömungsweg hintereinander angeordnet sind, wobei insbesondere wenigstens ein Element und/oder eine Baugruppe mittels eines Bypasses aus dem Hauptströmungsweg der Luft herausgenommen werden kann.

## Claims

1. Installation arrangement for an air-conditioning system with heating equipment, in particular for motor vehicles, with
at least one housing into which air is passed in an at lest partially predetermined flow path and
which comprises at least a first heating device (56) and at least one control device (64), such that the first heating device (56) is arranged in a first flow path and the control device (64) is arranged at least partially in a second flow path, and in at least one position the control device (64) causes air to flow virtually completely through the first heating device (56), and a second heating device (52) is provided in the first flow path of the housing, **characterised in that** in the first flow path a second control device (66) is connected downstream from the second heating device (52), which essentially prevents a flow of air against the main flow direction of the first flow path, the second control device (66) being designed such that it is at least partially opened by the air flowing through the heating device in the main flow direction, and the second control device (66) comprises a control element which at least partially opposes an opening movement of the control device.

2. Installation arrangement for an air-conditioning system with heating equipment, according to Claim 1, **characterised in that**
the housing has at least one inlet and at least one outlet for air.

3. Installation arrangement for an air-conditioning system with heating equipment, according to at least one of the preceding claims, **characterised in that**
the second heating device (52) is chosen from a group of heating devices that includes heat exchangers, CO₂ heat pumps, heaters which use exhaust gas heat, fuel heaters, condensers, static-mode heaters, electric heaters, PTC heaters and suchlike.

4. Installation arrangement for an air-conditioning system with heating equipment, according to at least one of the preceding claims, **characterised in that**
the second heating device (52) has a heat-conducting core whose heat exchanging surface is formed by baffle plates arranged at a specified angle to the main extension direction of the core to conduct heat at the surface thereof.

5. Installation arrangement for an air-conditioning system with heating equipment, according to Claim 4, **characterised in that**
at least part of the surface of the heat-conducting core has a flow of air around it.

6. Installation arrangement for an air-conditioning system with heating equipment, according to Claim 5, **characterised in that**
the cross-section of the heat-conducting core is designed such that the flow of air is essentially laminar along at least part of the surface of the heat-conducting core.

7. Installation arrangement for an air-conditioning system with heating equipment, according to any of Claims 4 to 6, **characterised in that**
the cross-sectional shape of the heat-conducting core is asymmetrical.

8. Installation arrangement for an air-conditioning system with heating equipment, according to any of Claims 4 to 7, **characterised in that**
a free cross-section is formed between the heat-conducting core and an element adjoining the heating device which at least partially delimits the first flow path, through which part of the air flowing through the heating device passes.

9. Installation arrangement for an air-conditioning system with heating equipment, according to any of Claims 4 to 8, **characterised in that**
a third flow path through which a heating medium flows is arranged inside the heat-conducting core.

10. Installation arrangement for an air-conditioning system with heating equipment, according to Claim 9, **characterised in that**
the said heating medium is a fluid, preferably a gas, and particularly preferably an exhaust gas from a combustion process.

11. Installation arrangement for an air-conditioning system with heating equipment, according to Claims 9 or 10, **characterised in that**
the heating medium flowing through the heat-conducting core produced a temperature gradient across the cross-section of the core.

12. Installation arrangement for an air-conditioning system with heating equipment, according to any of Claims 4 to 11, **characterised in that**
a temperature gradient of the heat-conducting core is at least partially parallel to a temperature gradient of the air flowing through the heating device.

13. Installation arrangement for an air-conditioning system with heating equipment, according to at least one of the preceding claims, **characterised in that**
the buffer plates of the heat exchanger surface have a basic shape selected from a group of shapes that includes squares, rectangles, circles, ellipses, polygons, combinations of the above and suchlike.

14. Installation arrangement for an air-conditioning system with heating equipment, according to at least one of the preceding claims, **characterised in that**
the second heating device (52) is arranged in a bypass duct.

15. Installation arrangement for an air-conditioning system with heating equipment, according to at least one of the preceding claims, **characterised in that**
the heat exchanging surface of the second heating device (52) is positioned at a predetermined angle relative to the longitudinal axis of the motor vehicle.

16. Installation arrangement for an air-conditioning system with heating equipment, according to at least one of the preceding claims, **characterised in that**
at least one fan (53), in particular an electric fan is arranged in the housing, which assists the movement of air through the device within at least one flow path.

17. Installation arrangement for an air-conditioning system with heating equipment, according to at least one of the preceding claims, **characterised in that**
the air is fed directly and/or indirectly through the outlet into the passenger compartment of a motor vehicle.

18. Installation arrangement for an air-conditioning system with heating equipment, according to at least one of the preceding claims, **characterised in that**
the control device (64) can be moved to at least two positions.

19. Installation arrangement for an air-conditioning system with heating equipment, according to at least one of the preceding claims, c**haracterised in that**
the control device is continuously adjustable, such that depending on its position the proportion of air flowing through the heating device and/or bypassing the heating device is varied and in particular regulated and/or controlled.

20. Installation arrangement for an air-conditioning system with heating equipment, according to at least one of the preceding claims, **characterised in that**
the control devices (64, 66) are chosen from a group of control devices that includes flaps, pivoting flaps, segmented flaps, wing flaps, shutters, in particular iris shutters, and suchlike.

21. Installation arrangement for an air-conditioning system with heating equipment, according to at least one of the preceding claims, **characterised in that**
a device (58) for filtering air is provided, in particular in the area of the inlet.

22. Installation arrangement for an air-conditioning system with heating equipment, according to at least one of the preceding claims, **characterised in that**
at the at least one air inlet and/or outlet a regulating or controlling device (59a, 59b) is provided, which in particular regulates or controls the quantity of air flowing through.

23. Installation arrangement for an air-conditioning system with heating equipment, according to at least one of the preceding claims, **characterised in that**
the air is passed at least partially along a partition wall to an internal combustion engine, and at least one heating device is arranged in this area in particular.

24. Installation arrangement for an air-conditioning system with heating equipment, according to at least one of the preceding claims, **characterised in that**
the device comprises at least one sensor chosen from a group of sensors that determine temperature, pressure, speed, for example the flow speed of a medium, or the position of a component.

25. Installation arrangement for an air-conditioning system with heating equipment, according to at least one of the preceding claims, **characterised in that**
the individual elements and/or assemblies of the device are arranged essentially one after the other in the flow direction, in such manner that in particular at least one element and/or assembly can be kept outside the main flow path by means of a bypass.

## Revendications

1. Montage encastré pour un système de climatisation comprenant un dispositif de chauffage, en particulier pour des véhicules automobiles, comprenant
au moins un carter dans lequel de l'air est guidé dans une trajectoire d'écoulement au moins partiellement prédéfinie, et
carter qui comporte au moins un premier dispositif de chauffage (56) et au moins un dispositif de réglage (64), où le premier dispositif de chauffage (56) est disposé dans une première trajectoire d'écoulement, le dispositif de réglage (64) étant disposé au moins partiellement dans une deuxième trajectoire d'écoulement, et le dispositif de réglage (64), dans au moins une position, déclenche complètement, dans une large mesure, le passage dans le premier dispositif de chauffage (56), où un deuxième dispositif de chauffage (52) est prévu dans la première trajectoire d'écoulement du carter,
**caractérisé en ce qu'**un deuxième dispositif de réglage (66) est disposé, dans la première trajectoire d'écoulement, en aval du deuxième dispositif de chauffage (52), deuxième dispositif de réglage qui empêche sensiblement un flux d'air de passer dans le sens inverse de la direction principale d'écoulement de la première trajectoire d'écoulement, où le deuxième dispositif de réglage (66) est réalisé de manière telle, qu'il soit au moins partiellement ouvert par l'air traversant le dispositif de chauffage, dans la direction principale d'écoulement, et le deuxième dispositif de réglage (66) présente un élément de réglage qui s'oppose au moins partiellement à un mouvement d'ouverture du dispositif de réglage.

2. Montage encastré pour un système de climatisation comprenant un dispositif de chauffage selon la revendication 1, **caractérisé en ce que** le carter présente au moins une entrée et au moins une sortie pour l'air.

3. Montage encastré pour un système de climatisation comprenant un dispositif de chauffage selon au moins l'une ou l'autre des revendications précédentes,
**caractérisé en ce que** le deuxième dispositif de chauffage (52) est sélectionné parmi un groupe de dispositifs de chauffage qui comprend des échangeurs de chaleur, des pompes à chaleur au CO₂, des chauffages utilisant de la chaleur des gaz d'échappement, un chauffage à combustible, des condenseurs, des chauffages auxiliaires, des chauffages électriques, des chauffages à coefficient de température positif (CTP) et des composants de type analogue.

4. Montage encastré pour un système de climatisation comprenant un dispositif de chauffage selon au moins l'une quelconque des revendications précédentes,
**caractérisé en ce que** le deuxième dispositif de chauffage (52) présente un noyau conducteur de la chaleur, noyau dont la surface de l'échangeur de chaleur est formée par des tôles qui, suivant un angle prédéfini par rapport à la direction principale de dilatation du noyau, sont disposées en étant conductrices de la chaleur sur la surface dudit noyau.

5. Montage encastré pour un système de climatisation comprenant un dispositif de chauffage selon la revendication 4, **caractérisé en ce qu'**au moins une zone partielle de la surface du noyau conducteur de la chaleur est baignée par de l'air.

6. Montage encastré pour un système de climatisation comprenant un dispositif de chauffage selon la revendication 5, **caractérisé en ce que** la section du noyau conducteur de la chaleur est configurée de manière telle, que l'écoulement de l'air est sensiblement laminaire au moins le long d'une partie de la surface du noyau conducteur de la chaleur.

7. Montage encastré pour un système de climatisation comprenant un dispositif de chauffage selon l'une quelconque des revendications 4 à 6, **caractérisé en ce que** la forme de section du noyau conducteur de la chaleur est asymétrique.

8. Montage encastré pour un système de climatisation comprenant un dispositif de chauffage selon l'une quelconque des revendications 4 à 7, **caractérisé en ce qu'**une section libre est formée entre le noyau conducteur de la chaleur et un élément se raccordant au dispositif de chauffage et délimitant au moins partiellement la première trajectoire d'écoulement, section qui est traversée par une partie de l'air traversant le dispositif de chauffage.

9. Montage encastré pour un système de climatisation comprenant un dispositif de chauffage selon l'une quelconque des revendications 4 à 8, **caractérisé en ce qu'**une troisième trajectoire d'écoulement est disposée à l'intérieur du noyau conducteur de la chaleur, troisième trajectoire d'écoulement qui est traversée par un moyen fournissant de la chaleur.

10. Montage encastré pour un système de climatisation comprenant un dispositif de chauffage selon la revendication 9, **caractérisé en ce que** le moyen fournissant de la chaleur est un fluide, de préférence un gaz et, de façon particulièrement préférable, un gaz d'échappement d'un processus de combustion.

11. Montage encastré pour un système de climatisation comprenant un dispositif de chauffage selon la revendication 9 ou 10, **caractérisé en ce que** le moyen fournissant de la chaleur, traversant le noyau conducteur de la chaleur, provoque un gradient de température sur la section du noyau.

12. Montage encastré pour un système de climatisation comprenant un dispositif de chauffage selon l'une quelconque des revendications 4 à 11, **caractérisé en ce qu'**un gradient de température du noyau conducteur de la chaleur est au moins partiellement parallèle à un gradient de température de l'air traversant le dispositif de chauffage.

13. Montage encastré pour un système de climatisation comprenant un dispositif de chauffage selon au moins l'une quelconque des revendications précédentes, **caractérisé en ce que** les tôles de la surface de l'échangeur de chaleur présentent une forme de base qui est sélectionnée parmi un groupe de formes qui comprend des carrés, des rectangles, des cercles, des ellipses, des polygones, des formes mixtes de ces éléments et des formes de type analogue.

14. Montage encastré pour un système de climatisation comprenant un dispositif de chauffage selon au moins l'une quelconque des revendications précédentes, **caractérisé en ce que** le deuxième dispositif de chauffage (52) est disposé dans un conduit de dérivation.

15. Montage encastré pour un système de climatisation comprenant un dispositif de chauffage selon au moins l'une quelconque des revendications précédentes, **caractérisé en ce que** la surface d'échange de chaleur du deuxième dispositif de chauffage (52) forme un angle prédéfini par rapport à l'axe longitudinal du véhicule automobile.

16. Montage encastré pour un système de climatisation comprenant un dispositif de chauffage selon au moins l'une quelconque des revendications précédentes, **caractérisé en ce qu'**il est prévu, dans le carter, au moins un ventilateur (53), en particulier un ventilateur électrique qui favorise le déplacement de l'air à travers le dispositif, à l'intérieur au moins d'une trajectoire d'écoulement.

17. Montage encastré pour un système de climatisation comprenant un dispositif de chauffage selon au moins l'une quelconque des revendications précédentes, **caractérisé en ce que** l'air est dirigé, à travers la sortie, directement et / ou indirectement dans l'habitacle d'un véhicule automobile.

18. Montage encastré pour un système de climatisation comprenant un dispositif de chauffage selon au moins l'une quelconque des revendications précédentes, **caractérisé en ce que** le dispositif de réglage (64) peut être placé dans au moins deux positions.

19. Montage encastré pour un système de climatisation comprenant un dispositif de chauffage selon au moins l'une quelconque des revendications précédentes, **caractérisé en ce que** le dispositif de réglage (64) est réglable en continu, où, en fonction de la position, la proportion d'air qui est guidée à travers le dispositif de chauffage et / ou devant le dispositif de chauffage, est modifiée et, en particulier, régulée et / ou contrôlée.

20. Montage encastré pour un système de climatisation comprenant un dispositif de chauffage selon au moins l'une quelconque des revendications précédentes, **caractérisé en ce que** les dispositifs de réglage (64, 66) sont sélectionnés parmi un groupe de dispositifs de réglage qui comprend des volets, des volets orientables, des volets à segments, des volets à ailettes, des diaphragmes, en particulier des diaphragmes à iris, et des composants de type analogue.

21. Montage encastré pour un système de climatisation comprenant un dispositif de chauffage selon au moins l'une quelconque des revendications précédentes, **caractérisé en ce qu'**il est prévu un dispositif (58) servant au filtrage de l'air, en particulier dans la zone de l'entrée.

22. Montage encastré pour un système de climatisation comprenant un dispositif de chauffage selon au moins l'une quelconque des revendications précédentes, **caractérisé en ce qu'**il est prévu, sur au moins une entrée et / ou sortie de l'air, un dispositif de régulation ou de commande (59a, 59b) qui régule ou contrôle en particulier la quantité de l'air qui circule.

23. Montage encastré pour un système de climatisation comprenant un dispositif de chauffage selon au moins l'une quelconque des revendications précédentes, **caractérisé en ce que** l'air est guidé vers un moteur de combustion interne, au moins partiellement le long d'une paroi de séparation, et **en ce qu'**au moins un dispositif de chauffage est disposé en particulier dans cette zone.

24. Montage encastré pour un système de climatisation comprenant un dispositif de chauffage selon au moins l'une quelconque des revendications précédentes, **caractérisé en ce que** le dispositif présente au moins un capteur qui est sélectionné parmi un groupe de capteurs qui déterminent la température, la pression, la vitesse, comme par exemple la vitesse d'écoulement d'un milieu, ou bien la position d'un composant.

25. Montage encastré pour un système de climatisation comprenant un dispositif de chauffage selon au moins l'une quelconque des revendications précédentes, **caractérisé en ce que** les différents éléments et / ou ensembles du dispositif sont disposés fondamentalement les uns derrière les autres dans la trajectoire d'écoulement, où, en particulier, au moins un élément et / ou un ensemble peut être extrait, par une dérivation, de la trajectoire principale d'écoulement de l'air.
